# EUROPEAN PATENT APPLICATION

(11) **EP 3 122 050 A1**
(43) Date of publication of application: **25.01.2017**
(21) Application number: 15765547.3
(22) Date of filing: 10.03.2015
(51) Int. Cl.: H04N 19/597, H04N 13/00

(54) **3D VIDEO ENCODING/DECODING METHOD AND DEVICE**

(30) Priority: 20.03.2014 US 201461955817 P
(71) Applicant: LG Electronics Inc., Yeongdeungpo-gu, Seoul 150-721 (KR)
(72) Inventor: YOO, Sunmi, Seoul 137-893 (KR); NAM, Junghak, Seoul 137-893 (KR); YEA, Sehoon, Seoul 137-893 (KR)
(74) Representative: Diehl & Partner GbR
(86) International application number: PCT/KR2015/002275
(87) International publication number: WO 2015/141977

(57) **Abstract**

The present invention provides a 3D video decoding method and device. A 3D video decoding method according to the present invention comprises the steps of: determining whether to apply motion vector inheritance for inducing a motion vector of a depth picture, using motion information of a texture picture; when it is determined to apply the motion vector inheritance, inducing a current block within the depth picture to a sub-block sized depth sub-block for the motion vector inheritance; inducing a motion vector of the depth sub-block from a texture block within the texture picture corresponding to the depth sub-block; and inducing a reconstructed sample of the current block by generating a prediction sample of the depth sub-block on the basis of the motion vector of the depth sub-block.

## Description

### BACKGROUND OF THE INVENTION

### Field of the invention

The present invention relates to a technology associated with video coding, and more particularly, to coding of a 3D video picture.

### Related Art

In recent years, demands for a high-resolution and high-quality video have increased in various fields of applications. However, the higher the resolution and quality video data becomes, the greater the amount of video data becomes.

Accordingly, when video data is transferred using media such as existing wired or wireless broadband lines or video data is stored in existing storage media, the transfer cost and the storage cost thereof increase. High-efficiency video compressing techniques can be used to effectively transfer, store, and reproduce high-resolution and high-quality video data.

On the other hand, with realization of capability of processing a high-resolution/high-capacity video, digital broadcast services using a 3D video have attracted attention as a next-generation broadcast service. A 3D video can provide a sense of realism and a sense of immersion using multi-view channels.

A 3D video can be used in various fields such as free viewpoint video (FVV), free viewpoint TV (FTV), 3DTV, surveillance, and home entertainments.

Unlike a single-view video, a 3D video using multi-views have a high correlation between views having the same picture order count (POC). Since the same scene is shot with multiple neighboring cameras, that is, multiple views, multi-view videos have almost the same information except for a parallax and a slight illumination difference and thus difference views have a high correlation therebetween.

Accordingly, the correlation between different views can be considered for coding/decoding a multi-view video, and information need for coding and/or decoding of a current view can be obtained. For example, a block to be decoded in a current view can be predicted or decoded with reference to a block in another view.

### SUMMARY OF THE INVENTION

The present invention provides a method and a device for deriving a motion vector of a depth picture from a texture picture in three-dimensional (3D) video coding.

The present invention provides a method and a device for deriving a motion vector of a depth picture by the sub-block using motion vector inheritance (MVI) in 3D video coding.

The present invention provides a method and a device for deriving a motion vector of a sub-block in a depth picture having no motion information in 3D video coding.

According to one embodiment of the present invention, there is provided a 3D video decoding method. The 3D video decoding method includes determining whether to apply motion vector inheritance of deriving a motion vector of a depth picture using motion information on a texture picture; deriving a current block in the depth picture as a depth sub-block with a sub-block size for the motion vector inheritance when it is determined to apply the motion vector inheritance; deriving a motion vector of the depth sub-block from a texture block in the texture picture corresponding to the depth sub-block; and deriving a reconstructed sample of the current block by generating a prediction sample of the depth sub-block based on the motion vector of the depth sub-block.

According to another embodiment of the present invention, there is provided a 3D video decoding device. The 3D video decoding device includes a prediction unit to determine whether to apply motion vector inheritance of deriving a motion vector of a depth picture using motion information on a texture picture, to derive a current block in the depth picture as a depth sub-block with a sub-block size for the motion vector inheritance when it is determined to apply the motion vector inheritance, to derive a motion vector of the depth sub-block from a texture block in the texture picture corresponding to the depth sub-block, and to derive a reconstructed sample of the current block by generating a prediction sample of the depth sub-block based on the motion vector of the depth sub-block.

According to the present invention, in 3D video coding, a motion vector of a depth picture may be derived from a texture picture, thereby increasing coding efficiency.

According to the present invention, in 3D video coding, a motion vector of a depth picture may be derived by the sub-block using MVI, thereby increasing prediction effect.

According to the present invention, in 3D video coding, a motion vector of a sub-block in a depth picture having no motion information may be derived, thereby increasing prediction effect.

### BRIEF DESCRIPTION OF THE DRAWINGS

FIG. 1 briefly illustrates a 3 dimensional (3D) video encoding and decoding process to which the present invention is applicable.
FIG. 2 briefly illustrates a structure of a video encoding device to which the present invention is applicable.
FIG. 3 briefly illustrates a structure of a video decoding device to which the present invention is applicable.
FIG. 4 briefly illustrates multi-view video coding to which the present invention is applicable.
FIG. 5 briefly illustrates a process of deriving a motion vector of a depth picture using motion vector inheritance (MVI).
FIG. 6 briefly illustrates a process of deriving a motion vector of a depth picture by the sub-block using MVI.
FIG. 7 briefly illustrates a method of filling a motion vector for a sub-block having no motion vector when a motion vector for a depth picture is derived by the sub-block using MVI according to an embodiment of the present invention.
FIG. 8 is a flowchart briefly illustrating a method of deriving a motion vector for a depth picture by the sub-block using MVI according to an embodiment of the present invention.

### DESCRIPTION OF EXEMPLARY EMBODIMENTS

The invention may be variously modified in various forms and may have various embodiments, and specific embodiments thereof will be illustrated in the drawings and described in detail. However, these embodiments are not intended for limiting the invention. Terms used in the below description are used to merely describe specific embodiments, but are not intended for limiting the technical spirit of the invention. An expression of a singular number includes an expression of a plural number, so long as it is clearly read differently. Terms such as "include" and "have" in this description are intended for indicating that features, numbers, steps, operations, elements, components, or combinations thereof used in the below description exist, and it should be thus understood that the possibility of existence or addition of one or more different features, numbers, steps, operations, elements, components, or combinations thereof is not excluded.

On the other hand, elements of the drawings described in the invention are independently drawn for the purpose of convenience of explanation on different specific functions, and do not mean that the elements are embodied by independent hardware or independent software. For example, two or more elements out of the elements may be combined to form a single element, or one element may be split into plural elements. Embodiments in which the elements are combined and/or split belong to the scope of the invention without departing from the concept of the invention.

Hereinafter, embodiments of the present invention will be described in detail with reference to the accompanying drawings. Hereinafter, like reference numerals are used to indicate like elements throughout the drawings, and the same descriptions on the like elements will be omitted.

In the specification, a pixel or a pel may mean a minimum unit constituting one picture. Further, a 'sample' may be used as a term indicating a value of a specific pixel. The sample generally indicates the pixel of the pixel, but may indicate only a pixel value of a luminance (luma) component or indicate only a pixel value of a chroma component.

A unit may mean a base unit of picture processing or a specific position of a picture. The unit may be used mixedly with a term such as a block or an area in some cases. In a general case, an M x N block may indicate a set of samples constituted by M columns and N rows or transform coefficients.

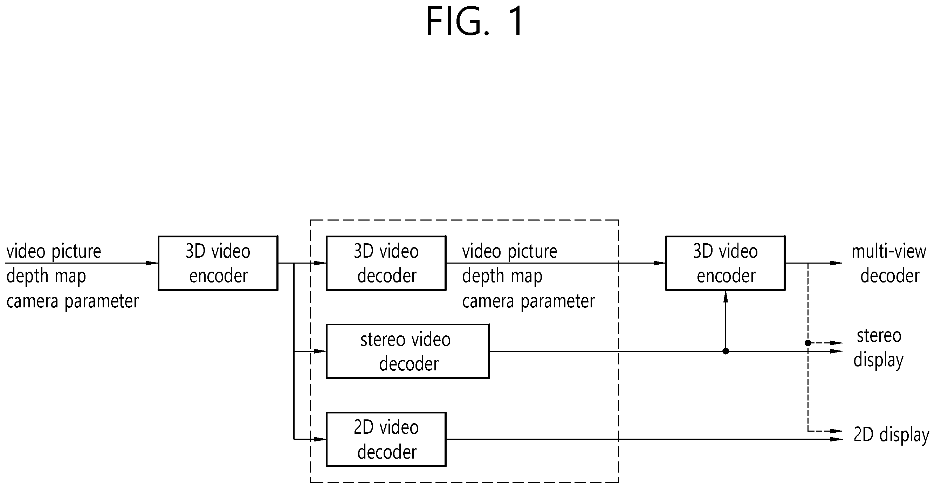

FIG. 1 briefly illustrates a 3 dimensional (3D) video encoding and decoding process to which the present invention is applicable.

Referring to FIG. 1, a 3 video encoder encodes a video picture and a depth and a camera parameter to output the same as a bitstream.

The depth map may be constituted by distance information (depth information) between a camera and a subject with respect to a pixel of the corresponding video picture (texture picture). For example, the depth map may be a picture acquired by normalizing the depth information according to a bit depth. In this case, the depth map may be constituted by the depth information recorded without expression of a chrominance.

In general, since a distance from the subject and a disparity are in inverse proportion to each other, disparity information indicating a correlation between views may be induced from the depth information of the depth map by using the camera parameter.

A bitstream including the depth map and camera information together with a general color picture, that is, the video picture (texture picture) may be transmitted to a decoder through a network or a storage medium.

The decoder receives the bitstream to reconstruct the video. When a 3D video decoder is used as the decoder, the 3D video decoder may decode the video picture, and the depth map and the camera parameter from the bitstream. Views required for a multi-view display may be synthesized based on the decoded video picture, depth map, and camera parameter. In this case, when the used display is a stereo display, the 3D picture may be displayed by using two pictures among the reconstructed multi-views.

When the stereo video decoder is used, the stereo video decoder may reconstruct two pictures to be incident in both eyes from the bitstream. The stereo display may display a 3D picture by using a view difference or disparity between a left picture incident in a left eye and a right picture incident in a right eye. When the multi-view display is used together with the stereo video decoder, the multi-views may be displayed by generating other views based on the two reconstructed pictures.

When a 2D decoder is used, a 2D picture is reconstructed to output the picture through a 2D display. The 2D display is used, but when the 3D video decoder or the stereo video decoder is used as the decoder, one of the reconstructed pictures may be output through the 2D display.

In the configuration of FIG. 1, the view synthesis may be performed by the decoder or the display. Further, the decoder and the display may be one apparatus or separate apparatuses.

In FIG. 1, for easy description, it is described that the 3D video decoder, the stereo video decoder, and the 2D video decoder are separate decoders, but one decoding apparatus may perform all 3D video decoding, stereo video decoding, and 2D video decoding. Further, a 3D video decoding apparatus may perform the 3D video decoding, a stereo video decoding apparatus may perform the stereo video decoding, and a 2D video decoding apparatus may perform the 2D video decoding. Furthermore, the multi-view display may output a 2D video or a stereo video.

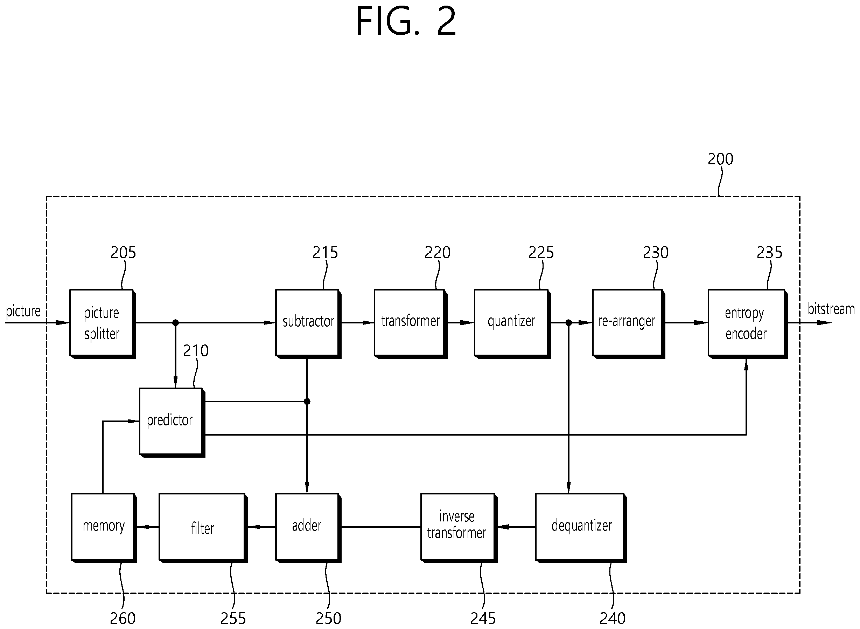

FIG. 2 briefly illustrates a structure of a video encoding device to which the present invention is applicable.

Referring to FIG. 2, the video encoding apparatus 200 includes a picture splitting unit 205, a prediction unit 210, a subtraction unit 215, a transform unit 220, a quantization unit 225, a reordering unit 230, an entropy encoding unit 235, an dequantization unit 240, an inverse transform unit 245, an adding unit 250, a filter unit 255, and a memory 260.

The picture splitting unit 205 may split an input picture into at least one processing unit block. In this case, the processing unit block may be a coding unit block, a prediction unit block, or a transform unit block. The coding unit block as a unit block of coding may be split from a maximum coding unit block according to a quad tree structure. The prediction unit block as a block partitioned from the coding unit block may be a unit block of sample prediction. In this case, the prediction unit block may be divided into sub blocks. The transform unit bock as the coding unit block may be split according to the quad tree structure and may be a unit block to induce a transform coefficient or a unit block to induce a residual signal from the transform coefficient.

Hereinafter, for easy description, the coding unit block is referred to as a coding block or a coding unit, and the prediction unit block is referred to as a prediction block or a prediction unit, and the transform unit block is referred to as a transformation block or a transform unit.

The prediction block or the prediction unit may mean a block-shape specific area or an array of the prediction sample. Further, the transformation block or the transform unit may mean the block-shape specific area or an array of the transform coefficient or a residual sample.

The prediction unit 210 may perform a prediction for a processing target block (hereinafter, referred to as a current block) and generate the prediction block including prediction samples for the current block. A unit of the prediction performed by the prediction unit 210 may be the coding block, the transformation block, or the prediction block.

The prediction unit 210 may decide whether an intra prediction is applied to the current block or whether an inter prediction is applied to the current block.

In the case of the intra prediction, the prediction unit 210 may induce the prediction sample for the current block based on a neighbor block pixel in a picture (hereinafter, a current picture) to which the current block belongs. In this case, the prediction unit 210 may (i) induce the prediction sample based an average or an interpolation of neighbor reference samples of the current block or (ii) induce the prediction sample based on a reference sample which is present in a specific direction with respect to a prediction target pixel among neighbor blocks of the current block. For easy description, the case of (i) is referred to as a non-directional mode and the case of (ii) is referred to as a directional mode. The prediction unit 210 may decide a prediction mode applied to the current block by using the prediction mode applied to the neighbor block.

In the case of the inter prediction, the prediction unit 210 may induce the prediction sample for the current block based on samples specified by a motion vector on a collocated picture. The prediction unit 10 applies any one of a skip mode, a merge mode, and an MVP mode to induce the prediction sample for the current block. In the cases of the skip mode and the merge mode, the prediction unit 210 may use motion information of the neighbor block as the motion information of the current block. In the case of the skip mode, a difference (residual) between the prediction sample and an original sample is not transmitted unlike the merge mode. In the case of the MVP mode, the motion vector of the neighbor block is used as a motion vector predictor (MVP) to induce the motion vector of the current block.

In the case of the inter prediction, the neighbor block includes a spatial neighbor block which is present in the current picture and a spatial neighbor block which is present in the collocated picture. The motion information includes the motion vector and the collocated picture. In the skip mode and the merge mode, when the motion information of the spatial neighbor block is used, a highest picture on a collocated picture list may be used as the collocated picture.

In the case of encoding a dependent view, the prediction unit 210 may perform an inter-view prediction.

The prediction unit 210 may configure the collocated picture list including a picture of another view. For the inter-view prediction, the prediction unit 210 may induce a disparity vector. Unlike a motion vector specifying a block corresponding to the current block in another picture in a current view, the disparity vector may specify a block corresponding to the current block in another view of the same access unit as the current picture.

The prediction unit 210 may specify a depth block in a depth view based on the disparity vector and perform a configuration of a merge list, an inter-view motion prediction, an illumination compensation (IC), view synthesis, and the like.

The disparity vector for the current block may be induced from a depth value by using the camera parameter or induced from the motion vector or disparity vector of the neighbor block in the current or another view.

For example, the prediction unit 210 may add to a merge candidate list an inter-view merging candidate (IvMC) corresponding to spatial motion information of a reference view, an inter-view disparity vector candidate (IvDC) corresponding to the disparity vector, a shifted IvMC induced by a shift of the disparity, a texture merging candidate (T) induced from a texture corresponding to a case in which the current block is a block on the depth map, a disparity derived merging candidate (D) derived from the texture merging candidate by using the disparity, a view synthesis prediction merge candidate (VSP) derived based on the view synthesis, and the like.

In this case, the number of candidates included in a merge candidate list applied to the dependent view may be limited to a predetermined value.

Further, the prediction unit 210 may predict the motion vector of the current block based on the disparity vector by applying the inter-view motion vector prediction. In this case, the prediction unit 210 may derive the disparity vector based on conversion of a maximum depth value in the corresponding depth block. When a position of the reference sample in the reference view is specified by adding the disparity vector to a sample position of the current block in the reference view, a block including the reference sample may be used as the reference block. The prediction unit 210 may use the motion vector of the reference block as a candidate motion parameter or a motion vector predictor candidate of the current block and use the disparity vector as a candidate disparity vector for the DCP.

The subtraction unit 215 generates the residual sample which is the difference between the original sample and the prediction sample. When the skip mode is applied, the subtraction unit 215 may not generate the residual sample as described above.

The transform unit 210 generates the transform coefficient by using transforming the residual sample by the unit of the transform block. The quantization unit 225 quantizes the transform coefficients to generate quantized transform coefficients.

The reordering unit 230 reorders the quantized transform coefficients. The reordering unit 230 may reorder the block-shape quantized transform coefficients in a 1D vector shape through a scanning method.

The entropy encoding unit 235 may perform entropy-encoding of the quantized transform coefficients. As the entropy encoding, encoding methods including, for example, exponential Golomb, context-adaptive variable length coding (CAVLC), context-adaptive binary arithmetic coding (CABAC), and the like may be used. The entropy encoding unit 235 may encode information (e.g., a value of a syntax element, and the like) required for video reconstruction together or separately in addition to the quantized transform coefficients.

The entropy-encoded information may be transmitted or stored by the unit of a network abstraction layer as the form of the bitstream.

The dequantization unit 240 dequantizes the quantized transform coefficient to generate the transform coefficient. The inverse transform unit 245 inversely transforms the transform coefficient to generate the residual sample.

The adding unit 250 adds the residual sample and the prediction sample to reconstruct the picture. The residual sample and the prediction sample are added to each other by the unit of the block to generate a reconstruction block. Herein, the adding unit 250 is described as a separate component, but the adding unit 250 may be a part of the prediction unit 210.

The filter unit 255 may apply a deblocking filter and/or offset to the reconstructed picture. Distortion during an artifact or a quantization process of a block boundary in the reconstructed picture may be corrected through the deblocking filtering and/or offset. The offset may be applied by the unit of the sample and applied after the process of the deblocking filtering is completed.

The memory 260 may store the reconstructed picture or information required for encoding/decoding. For example, the memory 60 may store pictures used for the inter prediction/inter-view prediction. In this case, the pictures used for the inter prediction/inter-view prediction may be designated by a collocated picture set or a collocated picture list.

Herein, it is described that one encoding apparatus encodes an independent view or the dependent view, but this is for easy description and a separate encoding apparatus is configured for each view or a separate internal module (for example, a prediction unit for each view) may be configured for each view.

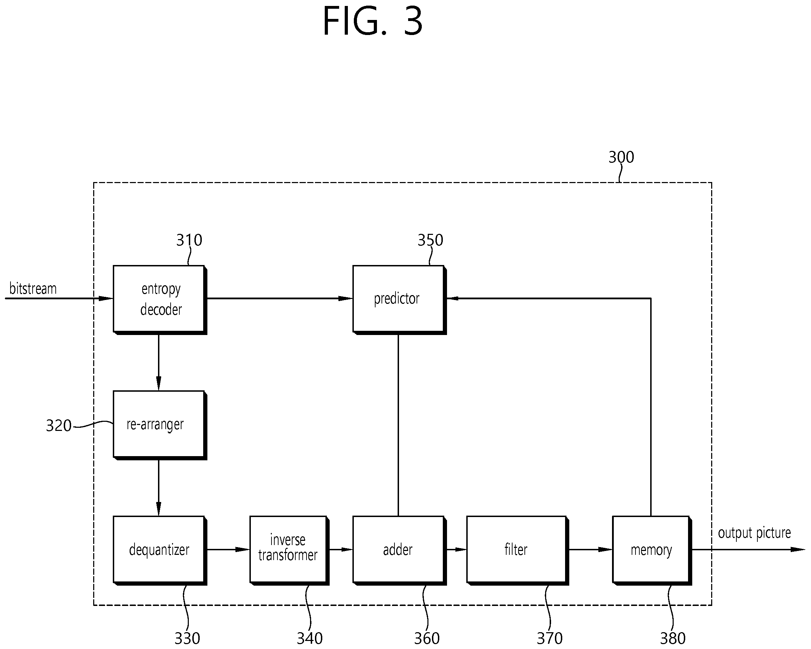

FIG. 3 briefly illustrates a structure of a video decoding device to which the present invention is applicable.

Referring to FIG. 3, the video decoding apparatus 300 includes an entropy decoding unit 310, a reordering unit 320, a dequantization unit 330, an inverse transform unit 340, a prediction unit 350, an adding unit 360, a filter unit 370, and a memory 380.

When a bitstream including video information is input, the video decoding apparatus 300 may reconstruct a video to correspond to a process in which the video information is processed by the video encoding apparatus.

For example, the video decoding apparatus 300 may perform video decoding by using the processing unit applied in the video encoding apparatus. In this case, the processing unit block of the video decoding may be the coding unit block, the prediction unit block, or the transform unit block. The coding unit block as a unit block of decoding may be split from the maximum coding unit block according to the quad tree structure. The prediction unit block as the block partitioned from the coding unit block may be the unit block of sample prediction. In this case, the prediction unit block may be divided into sub blocks. The transform unit bock as the coding unit block may be split according to the quad tree structure and may be a unit block to derive a transform coefficient or a unit block to derive a residual signal from the transform coefficient.

The entropy decoding unit 310 parses the bitstream to output information required for video reconstruction or picture reconstruction. For example, the entropy decoding unit 310 may decode information in the bitstream based on the exponential Golomb, the CAVLC, the CABAC, and the like and output the value of the syntax element required for the video reconstruction, the quantized value of the transform coefficient associated with the residual, and the like.

When a plurality of views is processed in order to reproduce the 3D video, the bitstream may be input for each view. Alternatively, information on the respective views may be multiplexed in the bitstream. In this case, the entropy decoding unit 310 de-multiplexes the bitstream to parse the de-multiplexed bitstream for each view.

The reordering unit 320 may reorder the quantized transform coefficients in the 2D block form. The reordering unit 320 may perform reordering to correspond to coefficient scanning performed by the encoding apparatus.

The dequantization unit 330 dequantizes the quantized transform coefficients based on (de)quantized parameters to output the transform coefficients. Information for deriving the quantized parameters may be signaled from the encoding apparatus.

The inverse transform unit 340 inversely transforms the transform coefficients to derive the residual samples.

The prediction unit 350 may perform a prediction for the current block and generate the prediction block including prediction samples for the current block. A unit of the prediction performed by the prediction unit 350 may be the coding block, the transformation block, or the prediction block.

The prediction unit 350 may decide whether the intra prediction is applied to the current block or whether the inter prediction is applied to the current block. In this case, a unit for deciding which the intra prediction or the inter prediction is applied and a unit for generating the prediction sample may be different from each other. Moreover, the units for generating the prediction sample in the inter prediction and the intra prediction may also be different from each other.

In the case of the intra prediction, the prediction unit 350 may derive the prediction sample for the current block based on the neighbor block pixel in the current picture. The prediction unit 350 may derive the prediction sample for the current block by applying the directional mode or the non-directional mode based on neighbor reference blocks of the current block. In this case, the prediction mode to be applied to the current block may be decided by using an intra prediction mode of the neighbor block.

In the case of the inter prediction, the prediction unit 350 may derive the prediction sample for the current block based on the samples specified by the motion vector on the collocated picture. The prediction unit 10 applies any one of the skip mode, the merge mode, and the MVP mode to derive the prediction sample for the current block.

In the cases of the skip mode and the merge mode, the prediction unit 350 may use the motion information of the neighbor block as the motion information of the current block. In this case, the neighbor block may include a spatial neighbor block and a temporal neighbor block.

The prediction unit 350 may configure the merge candidate list as motion information of an available neighbor block and information indicated by a merge index on the merge candidate list may be used as the motion vector of the current block. The merge index may be signaled from the encoding apparatus. The motion information includes the motion vector and the collocated picture. In the skip mode and the merge mode, when the motion information of the temporal neighbor block is used, the highest picture on the collocated picture list may be used as the collocated picture.

In the case of the skip mode, the difference (residual) between the prediction sample and the original sample is not transmitted unlike the merge mode.

In the case of the MVP mode, the motion vector of the neighbor block is used as the motion vector predictor (MVP) to derive the motion vector of the current block. In this case, the neighbor block may include the spatial neighbor block and the temporal neighbor block.

In the case of encoding the dependent view, the prediction unit 350 may perform the inter-view prediction. In this case, the prediction unit 350 may configure the collocated picture list including the picture of another view.

For the inter-view prediction, the prediction unit 350 may derive the disparity vector. The prediction unit 350 may specify the depth block in the depth view based on the disparity vector and perform the configuration of the merge list, the inter-view motion prediction, the illumination compensation (IC), the view synthesis, and the like.

The disparity vector for the current block may be derived from the depth value by using the camera parameter or derived from the motion vector or disparity vector of the neighbor block in the current or another view. The camera parameter may be signaled from the encoding apparatus.

When the merge mode is applied to the current block of the dependent view, the prediction unit 350 may add to the merge candidate list IvDC corresponding to the temporal motion information of the reference view, IvDC corresponding to the disparity vector, shift IvMC derived by the shift of the disparity vector, the texture merge candidate (T), derived from the texture corresponding to the case in which the current block is the block on the depth map, the disparity derive merge candidate (D) derived from the texture merge candidate by using the disparity, the view synthesis prediction merge candidate (VSP) derived based on the view synthesis, and the like.

In this case, the number of candidates included in the merge candidate list applied to the dependent view may be limited to a predetermined value.

Further, the prediction unit 350 may predict the motion vector of the current block based on the disparity vector by applying the inter-view motion vector prediction. In this case, the prediction unit 350 may use the block in the reference view specified by the disparity vector as the reference block. The prediction unit 350 may use the motion vector of the reference block as the candidate motion parameter or the motion vector predictor candidate of the current block and use the disparity vector as the candidate disparity vector for the DCP.

The adding unit 360 adds the residual sample and the prediction sample to reconstruct the current block or the current picture. The adding unit 360 adds the residual sample and the prediction sample by the unit of the block to reconstruct the current picture. When the skip mode is applied, since the residual is not transmitted, the prediction sample may become a reconstruction sample. Herein, the adding unit 360 is described as a separate component, but the adding unit 360 may be a part of the prediction unit 350.

The filter unit 370 may apply the deblocking filtering and/or offset to the reconstructed picture. In this case, the offset may be adaptively applied as the offset of the sample unit.

The memory 380 may store the reconstructed picture or information required for decoding. For example, the memory 380 may store pictures used for the inter prediction/inter-view prediction. In this case, the pictures used for the inter prediction/inter-view prediction may be designated by the collocated picture set or the collocated picture list. The reconstructed picture may be used as the collocated picture.

Further, the memory 380 may output the reconstructed pictures according to an output order. In order to reproduce the 3D picture, although not illustrated, an output unit may display a plurality of different views.

In the example of FIG. 3, it is described that one decoding apparatus decodes the independent view and the dependent view, but this is for easy description and the present invention is not limited thereto. For example, each decoding apparatus may operate for each view and one decoding apparatus may include an operating unit (for example, a prediction unit) corresponding to each view therein.

Multi-view video coding may code a current picture using coded data on another view belonging to the same access unit (AU) as the current picture, thereby increasing video coding efficiency of a current view. Here, an AU may refer to a set of pictures having the same POC. A POC corresponds to a turn to display a picture.

In multi-view coding, views may be coded by the AU or pictures may be coded by the view. Views may be coded according to a given order. A view that is coded first may be referred to as a base view or independent view. A view to be coded with reference to another view after the independent view is coded may be referred to as a dependent view. When a current view is a dependent view, another view used as a reference for coding the current view may be referred to as a reference view.

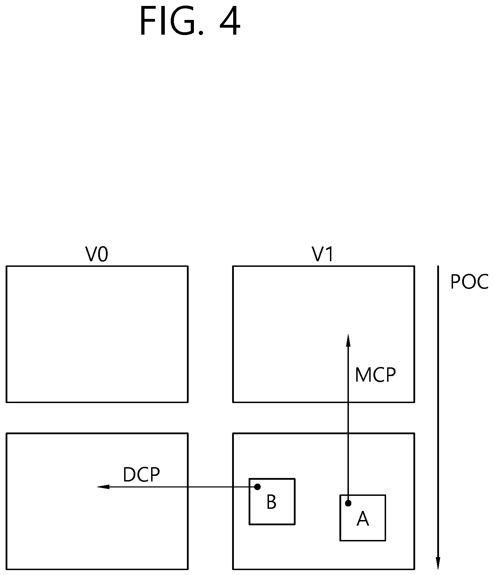

FIG. 4 briefly illustrates multi-view video coding to which the present invention is applicable.

In coding a multi-view video, pictures having different view identifiers (IDs) but having the same POC in one AU are coded according to a predefined view coding order.

For example, as illustrated in FIG. 4, suppose that two views (view V0 and view V1) are coded in order of view V0 and view V1. Here, view V0, which is coded first in an AU, is a base view or independent view and view V1, which is coded next, is a dependent view.

The base view is coded with reference to a picture belonging to the base view, not another view. The dependent view is coded following the base view with reference to another view that is already coded.

In multi-view video coding, inter prediction for a coding unit (CU) belonging to the dependent view may be performed with reference to an already coded picture. Here, a method of performing prediction with reference to a picture having the same view ID is referred to as motion compensated prediction (MCP), while a method of performing prediction with reference to a picture with a different view ID in the same AU is referred to as disparity compensated prediction (DCP).

For example, referring to FIG. 4, block A may be subjected to MCP with reference to a picture belonging to the same view (V1) as block A to derive prediction samples. Block B may be subjected to DCP with reference to a picture in a different view (VO) from block B in the same AU to derive prediction samples.

Meanwhile, a 3D video includes a texture picture having general color image information and a depth (or depth-map) picture having depth information on the texture picture.

The depth picture may be coded with reference to coding information on the texture picture from the same view (at the same time). That is, the depth picture may be coded with reference to the coding information on the texture picture having the same POC as the depth picture.

Since the depth picture may be captured simultaneously with the texture picture at the same time or be generated by reckoning depth information on the texture picture at the same time, the depth picture and the texture picture at the same time have a very high correlation.

Thus, in coding the depth picture, information on the already coded texture picture, such as block partition information or motion information on the texture picture, may be used. For example, the same motion information on the texture picture may be used for the depth picture, which is referred to as motion parameter inheritance (MPI). Particularly, a method of inheriting a motion vector from the texture picture is referred to motion vector inheritance (MVI).

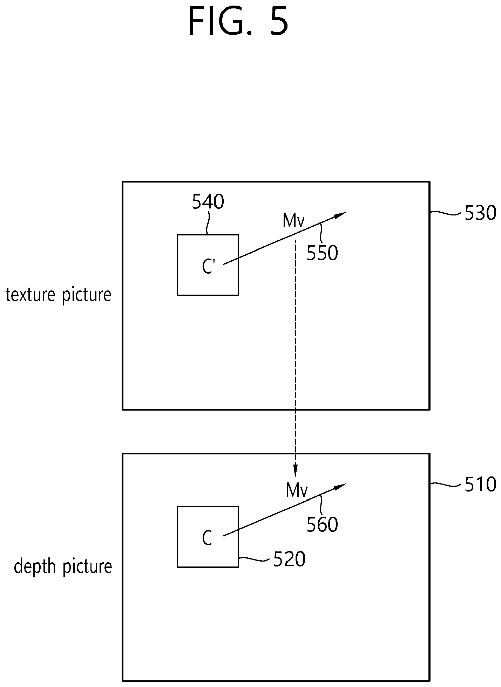

FIG. 5 briefly illustrates a process of deriving a motion vector of a depth picture using MVI.

Referring to FIG. 5, a motion vector may be inherited from a corresponding block 540 in a texture picture 530 at the same position as a current block 520 in a depth picture 510. For example, a motion vector 550 may be derived from a center of the corresponding block 540 to be used as a motion vector 560 for the current block 520. Here, when the corresponding block 540 at the same position as the current block 520 is an intra-predicted block, the motion vector 550 of the corresponding block 540 is not inherited.

FIG. 5 illustrates a method of deriving motion information from a center of a corresponding block in a texture picture and applying the motion information to a current block in a depth picture. According to another method, a corresponding block in a texture picture is partitioned into sub-blocks with a regular size and motion information is brought by the partitioned sub-block to be applied to a current block in a depth picture. Here, the corresponding block may be a prediction unit (PU), and a sub-block may be a sub-PU.

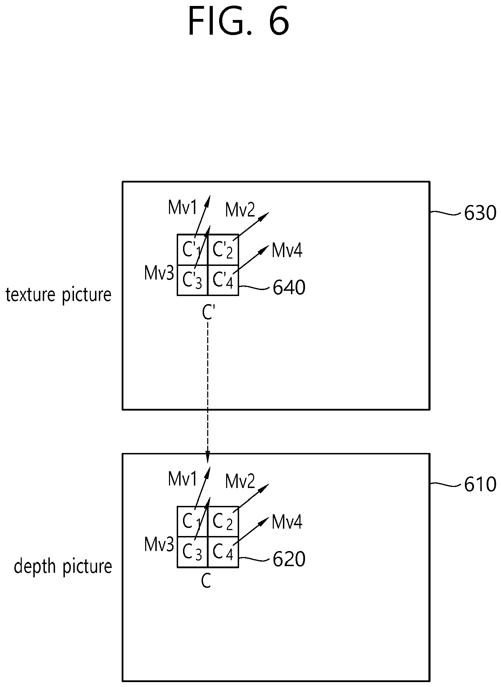

FIG. 6 briefly illustrates a process of deriving a motion vector of a depth picture by the sub-block using MVI.

The embodiment of FIG. 6 illustrates a method of deriving a motion vector of a depth picture by the sub-block (sub-PU) from a texture picture.

Referring to FIG. 6, a motion vector for a current block 620 in a depth picture 610 may be inherited from a corresponding block 640 in a texture picture 630. Here, inheritance of the motion vector may be achieved by the sub-block.

When the current block 620 is a PU (or prediction block), sub-blocks C1 to C4 in the current block 620 and sub-blocks C'1 to C'4 in the corresponding block 640 are sub-PUs (or sub-prediction blocks).

The size of the sub-PUs may be set to N x M (N and M are integers greater than 0) and motion vectors for the sub-blocks C1 to C4 in the current block 620 may be brought from the sub-blocks C'1 to C'4 in the corresponding block 640 based on the defined size of the sub-PUs regardless of original partition information on blocks in the texture picture.

Here, a position from which motion information is brought in the sub-PUs may be a center of the sub-PUs or be a top left position of the sub-PUs.

As described above, when the motion information for the depth picture is derived by the sub-PU from the texture picture, there may be no motion information for a specific sub-PU. Hereinafter, the present invention provides a method of filling motion information for a sub-PU having no motion information when motion information for a depth picture is derived by the sub-PU using MVI.

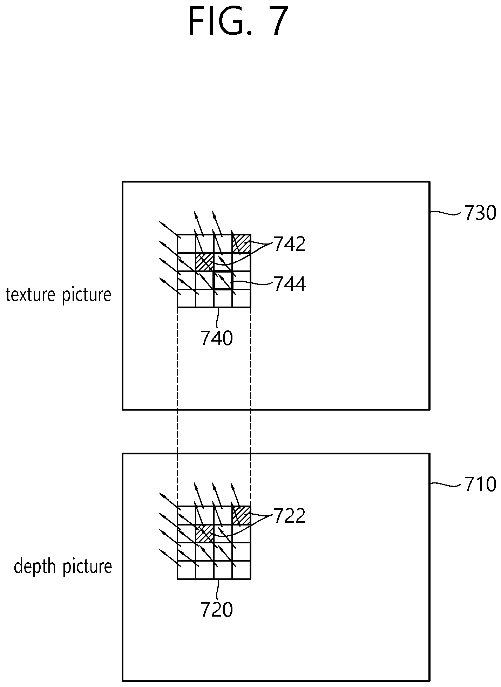

FIG. 7 briefly illustrates a method of filling a motion vector for a sub-block having no motion vector when a motion vector for a depth picture is derived by the sub-block using MVI according to an embodiment of the present invention.

Referring to FIG. 7, when a motion vector is derived by the sub-block using MVI, a depth block 720 of a depth picture 710 to be currently coded (encoded/decoded) may be partitioned according to a predefined sub-block size. The predefined sub-block size may be information signaled from an encoding device, which may be an N x M size (N and M are integers greater than 0).

Each partitioned sub-block of the depth block 720 (hereinafter, a sub-block in the depth block 720 is referred to as a depth sub-block) may obtain a motion vector from a texture sub-block at a corresponding position to that of each depth sub-block in a texture picture 730.

Here, the depth block 720 may be a prediction block or PU, and a depth sub-block may be a sub-prediction block or a sub-PU.

The texture picture 730 may be a picture at the same time as the depth picture 710, that is, a picture having the same POC as the depth picture 710, and may also be a picture having the same view ID as the depth picture 710. A texture sub-block may be a prediction block (or PU) in the texture picture 730 that is present at the same position as a depth sub-block. A texture block 740 may be a prediction block (or PU) in the texture picture 730 that is present at the same position as the depth block 720.

In deriving a motion vector for a depth sub-block from a texture sub-block in the texture picture 730, there may be no motion vector of a texture sub-block 742. For example, when a texture sub-block is coded in an intra prediction mode, no motion vector may be present. In this case, a corresponding depth sub-block 722 may not obtain motion vector information from the texture sub-block 742.

Here, a motion vector of a neighboring block may fill a motion vector for the depth sub-block 722. The motion vector of the neighboring block may be a motion vector of a left or upper depth sub-block (or texture sub-block).

Alternatively, a predefined motion vector may fill the motion vector for the depth sub-block 722. The predefined motion vector may be a motion vector of a block indicated by a disparity vector from a neighboring block (NBDV) or depth-oriented NBDV. Alternatively, the predefined motion vector may be a newest motion vector as a motion vector that is derived last, which may be updated continuously. Alternatively, the predefined motion vector may be a zero vector (0,0). Here, a disparity vector derived from a neighboring block is referred to as an NBDV and a disparity vector obtained by modifying the disparity vector derived from the NBDV using depth information is referred to as a DoNBDV

Alternatively, a motion vector present at a specific position in the depth block 720 may fill the motion vector for the depth sub-block 722. Here, the specific position may be a center position, a top left position, a bottom right position, or the like in the block.

For example, the specific position (for example, the center position) in the depth block 720 is calculated. If a motion vector of a texture sub-block corresponding to the specific position is present, the motion vector of the texture sub-block may be defined as a default motion vector. Referring to FIG. 7, a sub-block of a texture block 740 corresponding to the center position of the depth block 720 may be a texture sub-block 744. Here, if a motion vector of the texture sub-block 744 is present, this motion vector may be set as a default motion vector for the depth block 720. If motion information is not filled from the texture sub-block in deriving a motion vector for the depth sub-block, the default motion vector may be set as the motion vector for the depth sub-block 722.

As described above, when a motion vector present at a specific position is defined for use as a default motion vector, the absence of a motion vector at the specific position may make it impossible to set a default motion vector itself. In this case, whether to perform MVI may be determined depending on whether a default motion vector is set. For example, when a default motion vector is not set, MVI for the depth block 720 may not be performed. Alternatively, when a default motion vector is not set, a motion vector indicated by an NBDV or DoNBDV or a zero vector may be set as a motion vector for the depth sub-block 722 having no motion vector.

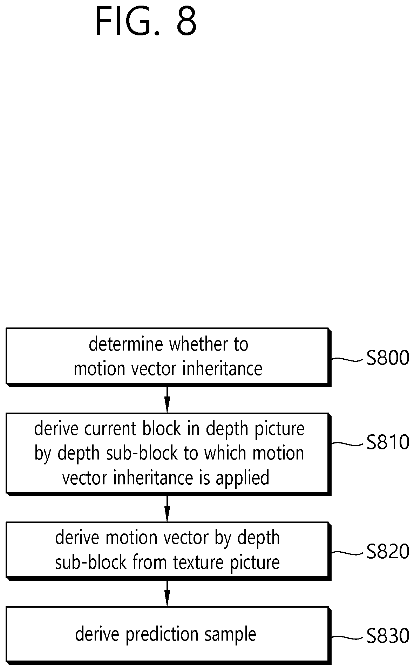

FIG. 8 is a flowchart briefly illustrating a method of deriving a motion vector for a depth picture by the sub-block using MVI according to an embodiment of the present invention. The method of FIG. 8 may be performed by the encoding device illustrated in FIG. 2 and the decoding device illustrated in FIG. 3. For convenience of description, the present embodiment illustrates that the method is performed by the prediction units of the encoding device of FIG. 2 and the decoding device of FIG. 3.

Referring to FIG. 8, the prediction units determine whether to apply MVI (S800).

As described above, MVI refers to a method of deriving a motion vector for a depth picture using motion information on a texture picture. That is, the same motion information on the texture picture may be used for the depth picture.

The decoding device may determine whether to apply MVI to the depth picture based on information signaled from the encoding device.

When it is determined to apply MVI to the depth picture, the prediction units derive a current block in the depth picture as a depth sub-block to which MVI is applied (S810).

The current block may be a prediction block or PU as a unit for performing prediction.

The depth sub-block may be determined based on sub-block size information for MVI. The sub-block size information for MVI is information signaled from the encoding device, which may be an N x M size (N and M are integers greater than 0).

The prediction units derive a motion vector by the depth sub-block from the texture picture (S820). More specifically, the prediction units may derive a texture block (texture sub-block) in the texture picture which is present at the same position as the depth sub-block and may set a motion vector of the texture block as a motion vector for the depth sub-block.

The texture picture is a picture at the same time as the depth picture, which may have the same POC and the same view ID as the depth picture.

Here, when there is no motion information on the texture block (for example, when the texture block is coded in the intra prediction mode), the depth sub-block may not obtain a motion vector from the texture block of the texture picture.

In this case, the prediction units may derive a motion vector for the depth sub-block as described above in FIG. 7.

For example, the prediction units may derive a default motion vector from a corresponding block in the texture picture corresponding to a specific position (a center position, a top left position, a bottom right position, or the like) of the current block. If there is no motion information on the texture block in deriving the motion vector for the depth sub-block, the prediction units may set the default motion vector as the motion vector for the depth sub-block.

Here, when there is no motion information on the corresponding block, it is also impossible to derive the default motion vector. That is, it may be impossible to set the default motion vector. In this case, the prediction units may determine whether to perform MVI based on whether the default motion vector is set. For example, when the default motion vector is not set, the prediction units may not perform MVI for the current block. Alternatively, when the default motion vector is not set, the prediction units may set a motion vector indicated by an NBDV or DoNBDV or a zero vector as the motion vector for the depth sub-block.

In another example, when there is no motion information on the texture block in deriving the motion vector for the depth sub-block, the prediction units may set a motion vector of a neighboring block as the motion vector for the depth sub-block. The motion vector of the neighboring block may be a motion vector of a left or upper depth sub-block. Alternatively, the motion vector of the neighboring block may be a motion vector of a texture block disposed on the left or upper side of a texture block having no motion information.

In still another example, when there is no motion information on the texture block in deriving the motion vector for the depth sub-block, the prediction units may set a predefined motion vector as the motion vector for the depth sub-block. For example, the predefined motion vector may be a zero vector, a newest motion vector as a motion vector that is derived last, or a motion vector of a block indicated by an NBDV or DoNBDV.

The prediction units generate a prediction sample of the depth sub-block based on the derived motion vector of the depth sub-block (S830).

For example, the prediction units may use samples in an area indicated by the motion vector of the depth sub-block in a reference picture as the prediction sample for the depth sub-block.

The prediction units may construct the prediction sample for the current block based on the prediction samples of the depth sub-block and may add the prediction sample of the current block and a residual sample to derive a reconstructed block.

As described above, when a motion vector for a current block in a depth picture to be currently coded (encoded/decoded) is derived from a texture block of a corresponding texture picture, either of a PU or a sub-PU may be used as a unit. In the present invention, an additional flag may be used to adaptively select one of a PU or a sub-PU as a unit.

In the aforementioned illustrated system, methods have been described based on flowcharts as a series of steps or blocks, but the methods are not limited to the order of the steps of the present invention and any step may occur in a step or an order different from or simultaneously as the aforementioned step or order. The aforementioned embodiments include examples of various aspects. Therefore, all other substitutions, modifications, and changes of the present invention that belong to the appended claims can be made.

## Claims

1. A three-dimensional (3D) video decoding method comprising:
determining whether to apply motion vector inheritance of deriving a motion vector of a depth picture using motion information on a texture picture;
deriving a current block in the depth picture as a depth sub-block with a sub-block size for the motion vector inheritance when it is determined to apply the motion vector inheritance;
deriving a motion vector of the depth sub-block from a texture block in the texture picture corresponding to the depth sub-block; and
deriving a reconstructed sample of the current block by generating a prediction sample of the depth sub-block based on the motion vector of the depth sub-block.

2. The 3D video decoding method of claim 1, further comprising deriving a default motion vector from a corresponding block of the texture picture corresponding to a center position of the current block,
wherein the deriving of the motion vector of the depth sub-block sets the default motion vector as the motion vector of the depth sub-block when there is no motion information on the texture block.

3. The 3D video decoding method of claim 2, wherein the deriving of the motion vector of the depth sub-block sets a motion vector of a block indicated by a disparity vector from a neighboring block (NBDV) or depth-oriented NBDV or a zero vector as the motion vector of the depth sub-block when there is no motion information on the corresponding block.

4. The 3D video decoding method of claim 2, wherein the deriving of the motion vector of the depth sub-block does not apply the motion vector inheritance to the depth sub-block when there is no motion information on the corresponding block.

5. The 3D video decoding method of claim 1, wherein the deriving of the motion vector of the depth sub-block sets a motion vector of a neighboring block as the motion vector of the depth sub-block when there is no motion information on the texture block, and the motion vector of the neighboring block is a motion vector of a block positioned on a left or upper side of the depth sub-block.

6. The 3D video decoding method of claim 1, wherein the deriving of the motion vector of the depth sub-block sets a predefined motion vector as the motion vector of the depth sub-block when there is no motion information on the texture block, and the predefined motion vector is a motion vector of a block indicated by an NBDV or DoNBDV, a zero vector, a motion vector of a sub-block at a specific position in the texture block, or a newest motion vector that is derived last.

7. The 3D video decoding method of claim 1, wherein the texture picture is a picture having the same picture order count (POC) and the same view identifier (ID) as the depth picture.

8. The 3D video decoding method of claim 1, wherein the texture block is a block that is at the same position as the depth sub-block in the texture picture.

9. The 3D video decoding method of claim 1, wherein the sub-block has a size determined based on information received from an encoder.

10. The 3D video decoding method of claim 1, wherein the current block is a prediction block.

11. A three-dimensional (3D) video decoding device comprising:
a prediction unit to determine whether to apply motion vector inheritance of deriving a motion vector of a depth picture using motion information on a texture picture,
to derive a current block in the depth picture as a depth sub-block with a sub-block size for the motion vector inheritance when it is determined to apply the motion vector inheritance,
to derive a motion vector of the depth sub-block from a texture block in the texture picture corresponding to the depth sub-block, and
to derive a reconstructed sample of the current block by generating a prediction sample of the depth sub-block based on the motion vector of the depth sub-block.

12. The 3D video decoding device of claim 11, wherein the prediction unit derives a default motion vector from a corresponding block of the texture picture corresponding to a center position of the current block, and sets the default motion vector as the motion vector of the depth sub-block when there is no motion information on the texture block.

13. The 3D video decoding device of claim 12, wherein the prediction unit sets a motion vector of a block indicated by a disparity vector from a neighboring block (NBDV) or depth-oriented NBDV or a zero vector as the motion vector of the depth sub-block when there is no motion information on the corresponding block.

14. The 3D video decoding device of claim 12, wherein the prediction unit does not apply the motion vector inheritance to the depth sub-block when there is no motion information on the corresponding block.

15. The 3D video decoding device of claim 11, wherein the prediction unit sets a motion vector of a neighboring block as the motion vector of the depth sub-block when there is no motion information on the texture block, and the motion vector of the neighboring block is a motion vector of a block positioned on a left or upper side of the depth sub-block.

16. The 3D video decoding device of claim 11, wherein the prediction unit sets a predefined motion vector as the motion vector of the depth sub-block when there is no motion information on the texture block, and the predefined motion vector is a motion vector of a block indicated by an NBDV or DoNBDV, a zero vector, a motion vector of a sub-block at a specific position in the texture block, or a newest motion vector that is derived last.

17. The 3D video decoding device of claim 11, wherein the texture picture is a picture having the same picture order count (POC) and the same view identifier (ID) as the depth picture.

18. The 3D video decoding device of claim 11, wherein the texture block is a block that is at the same position as the depth sub-block in the texture picture.

19. The 3D video decoding device of claim 11, wherein the sub-block has a size determined based on information received from an encoder.

20. The 3D video decoding device of claim 11, wherein the current block is a prediction block.
